# EUROPÄISCHE PATENTSCHRIFT

(11) **EP 0 559 957 B1**
(45) Veröffentlichungstag und Bekanntmachung des Hinweises auf die Patenterteilung: **30.12.1998**
(21) Anmeldenummer: 92118165.7
(22) Anmeldetag: 23.10.1992
(51) Int. Cl.: H04B 1/66, H04B 1/56

(54) **Funkgerät für ein TDM-FDM-Funkübertragungssystem**
Radio transceiver for FDM-TDM transmission system
Emetteur récepteur radio pour système de transmission à multiplexage par répartition fréquentielle et temporelle

(30) Priorität: 12.03.1992 DE 4207809
(43) Veröffentlichungstag der Anmeldung: 15.09.1993
(73) Patentinhaber: GRUNDIG Aktiengesellschaft, 90762 Fürth (DE)
(72) Erfinder: Elsinger, Horst, Grundig E.M.V., Max Grundig, W-8510 Fürth (DE)

(56) Entgegenhaltungen:
- WO-A-87/06083
- US-A- 4 839 923
- US-A- 4 893 308

## Beschreibung

Die Erfindung betrifft ein Funkgerät für ein TDM-FDM-Funkübertragungssystem gemäß dem Oberbegriff des Patentanspruchs 1.

Um dem Wunsch des Fernsprechteilnehmers nach mobiler Kommunikation zu entsprechen, sind in den letzten Jahren nicht nur verstärkt die bekannten Mobilfunkdienste, die man grob in die Bereiche Funktelefondienst, Funkrufdienst und andere Mobilfunkdienste, z.B. Datenfunk oder Betriebsfunk, gliedern kann, weiter entwickelt worden. Auch durch den Einsatz sogenannter schnurloser Telefonapparate (Cordless Telephone) kann der Bewegungsbereich des Benutzers erweitert werden. Die Nachrichtenübertragung zwischen einer Basisstation und der zugehörigen Mobilstation des schnurlosen Telefonapparats erfolgt dabei über ein Funkkanalpaar, wobei hinsichtlich der Funkübertragungstechnik bei einem schnurlosen Telefonapparat in entsprechender Weise wie bei einem Funkgerät vorgegangen werden kann. Derzeit in der Bundesrepublik Deutschland zugelassene schnurlose Telefonapparate weisen eine Sendeleistung von bis zu 10 mW auf. Die mit CT1 bezeichneten schnurlosen Telefonappaate haben für die Nachrichtenübertragung 40 Funkkanäle (mit FDMA; Frequency Division Multiple Access) in um 900 MHz liegenden Frequenzband zur Verfügung. Die Bandbreite eines Funkkanals beträgt 25 kHz, wobei der Frequenzabstand der beiden für den Duplexbetrieb benötigten Funkkanäle 45 MHz beträgt. Neuere als CT1+ bezeichnete schnurlose Telefonapparate weisen im Frequenzband von 885 - 887 MHz (für die eine Übertragungsrichtung) und im Frequenzband von 930 - 932 MHz (für die andere Übertragungsrichtung) insgesamt 80 Funkkanäle zu je 2 x 25 kHz auf, so daß insgesamt 4 MHz verfügbare Frequenzbandbreite genutzt werden.

Neben dem vorstehend beschriebenen FDM-Funkübertragungssystem sind auch FDM-TDM-Funkübertragungssysteme bekannt, bei denen zur Nachrichtenübertragung die Kombination der beiden Multiplexverfahren Frequenzmultiplex und Zeitmultiplex benutzt wird. Ein Beispiel hierfür ist das zukünftige DECT (Digital European Cordless Telephone), bei dem voraussichtlich auf einem Träger zwölf Duplex-Kanäle mittels eines TDMA/TDD-Zugriffs (TDMA, Time Division Multiple Access; TDD, Time Division Duplex) zur Verfügung stehen. Die zehn Träger (Modulationsträger) sollen im Frequenzband von 1,88 bis 1,9 GHz liegen, wodurch insgesamt 120 Funkkanäle mit einer Frequenzbandbreite von insgesamt ca. 20 MHz für die Nachrichtenübertragung genutzt werden können. Ausführungsformen der hierbei möglicherweise zum Einsatz kommenden Sende-/Empfangseinrichtung sind beispielsweise in der EP-A2-0 292 996 oder in der EP-B1-0 261 127 beschrieben.

Aus der EP-B1-0 261 127 ist eine Sende-/Empfangseinrichtung bekannt, die ein Zeitmultiplexverfahren benutzt. In dieser Sende-/Empfangseinrichtung wird ein Sprachsignal vocodiert und mit einer ersten Geschwindigkeit, zusammen mit einer Präambel, in einen Pufferspeicher eingeschrieben. Die den Sprachdaten vorangestellte Präambel beinhaltet dabei Synchronisations- und Steuerdaten. Ist der Pufferspeicher mindestens zur Hälfte belegt, wird er in dem der Übertragung zugeordneten Zeitschlitz mit einer zweiten Geschwindigkeit ausgelesen, die mindestens doppelt so groß ist wie die erste Geschwindigkeit. Im Empfänger wird das übertragene Signal empfangen und mit einer zweiten Geschwindigkeit in einen Pufferspeicher eingeschrieben. Aus diesem wird es mit einer ersten Geschwindigkeit ausgelesen. Die Präambel wird von den Sprachdaten abgetrennt, welche decodiert und ausgegeben werden. Hierbei ist die Länge eines Zeitschlitzes variabel und wird vom Sender an den Empfänger übertragen.

Diese Sende-/Empfangseinrichtung hat den Nachteil, daß merkliche Laufzeiten zwischen Sender und Empfänger entstehen können, wenn nur wenig Sprachdaten zu übertragen sind, so daß es lange dauert, bis der Pufferspeicher zur Hälfte gefüllt ist. Dieser Nachteil gewinnt um so mehr an Bedeutung, je besser Redundanz aus den Sprachdaten entfernt werden kann.

Ein weiterer Nachteil besteht darin, daß das Verändern der Dauer eines Übertragungszeitschlitzes nicht konform zur DECT-Spezifikation ist.

Weiterhin sind aus der EP-A2-0 292 996 mehrere Ausführungsformen einer Sende-/Empfangseinrichtung für den Zeitmultiplexbetrieb bekannt. Die dritte Ausführungsform weist u.a. einen Geschwindigkeitskonverter und eine Einfügeschaltung für Steuerdaten auf. Der Geschwindigkeitskonverter dient dazu, ein mit einer ersten Taktrate kodiertes Sprachsignal mit einer zweiten, höheren Taktrate zu übertragen, oder ein mit einer zweiten Taktrate empfangenes Signal mit einer ersten, niedrigeren Taktrate auszugeben. Die Einfügeschaltung für Steuerdaten hat die Funktion, unmittelbar vor den Sprachdaten Steuerdaten mit einer zweiten, hohen Taktrate einzufügen, so daß Steuerdaten und Sprachdaten im gleichen Zeitschlitz aufeinanderfolgend gesendet werden. Im Empfänger werden durch eine Schaltung die Steuerdaten von den Sprachdaten getrennt, die Steuerdaten ausgewertet und die Sprachdaten mit einer niedrigeren Taktrate ausgegeben.

Von Nachteil bei dieser Schaltungsanordnung ist, daß für die Konvertierung der Geschwindigkeit und zum Einfügen bzw. Extrahieren von Steuerdaten jeweils spezielle Schaltungen erforderlich sind, was zu einem großen Schaltungsaufwand führt. Ein weiterer Nachteil besteht darin, daß die Steuerdaten mit einer hohen Taktrate den Sprachdaten vorangestellt werden, bzw. aus den Übertragungsdaten extrahiert werden müssen.

Aus US-A-4 893 308 ist ein Funkgerät der eingangs genannten Art bekannt. Das Funkgerät weist in der Sendeeinrichtung einen Codierer auf, der mit einem Bitratenwandler zur Erhöhung der Bitrate verbunden ist. In der Empfangseinrichtung ist ein weiterer Bitratenwandler zur Verringerung der Bitrate der Sprachdaten vorgesehen, die einem Decoder zur Wiederherstellung des analogen Sprachsignals zugeleitet werden. Darüberhinaus ist eine Schalteinrichtung zur Umschaltung zwischen Sende- und Empfangsbetrieb vorgesehen, wobei in der Sendeeinrichtung eine oder mehrere Schalteinrichtungen angeordnet sind, die den Bitratenwandler mit dem Codierer oder mit dem Hochfrequenz-Sendeteil oder mit der Steuereinrichtung verbinden. Die Empfangseinrichtung weist eine oder mehrere Schalteinrichtungen auf, die den Bitratenwandler der Empfangseinrichtung mit dem Decodierer oder mit dem Hochfrequenzempfangsteil oder mit der Steuereinrichtung verbinden, wobei die Bitratenwandler adressierbare Speicher sind.

Der Erfindung liegt die Aufgabe zugrunde, ein kostengünstiges und leistungsfähiges Funkgerät zu realisieren, das nach den DECT-Spezifikationen arbeitet und dessen Übertragungsprotokoll leicht geändert werden kann.

Diese Aufgabe wird bei einem Funkgerät der eingangs genannten Art durch die im Kennzeichnenden Teil des Anspruchs 1 angegebenen Merkmalegelöst. Die einzelnen Datenquellen und -senken werden in der Sendeeinrichtung (Kodierer, Steuereinrichtung, Sender) durch Schaltmittel mit einem Bitratenwandler verbunden der wiederum von Zählern oder Adressgeneratoren adressiert wird. In der Empfangseinheit werden die Datenquellen und -senken, ebenso wie die Zähler und Adressgeneratoren, zur Adressierung des Bitratenwandlers gleichfalls durch Schaltmittel mit dem Bitratenwandler verbunden. Durch den Einsatz der Schaltmittel ist es nun möglich, den Bitratenwandler zu fest vorgegebenen Zeitpunkten mit einer Datenquelle/Datensenke zu verbinden, so daß eine Zeitmultiplexschaltung realisiert ist. Dadurch können mehrere Datenquellen/Datensenken ihre Daten an den Bitratenwandler abgeben oder von ihm empfangen. Gleichzeitig dazu wird der Bitratenwandler mit einem entsprechenden Adressgenerator verbunden, wodurch eine beliebige Anordnung der Daten im Bitratenwandler und damit bei der Übertragung realisiert werden kann.

Das erfindungsgemäße Funkgerät weist den Vorteil auf, daß für das Einfügen von Synchronisations- und/oder Steuerdaten in das zu übertragende Signal keine spezielle Schaltung erforderlich ist. Ebenso wird für das Extrahieren von Synchronisations- und/oder Steuerdaten aus dem übertragenen Signal keine spezielle Schaltung benötigt.

Ein weiterer Vorteil ist, daß die in das zu übertragende Signal einzufügenden Synchronisations- und/oder Steuerdaten von variabler Länge sein können, ohne schaltungstechnische Änderungen zu erfordern, solange sie eine maximale Länge nicht überschreiten. Eine Änderung der Synchronisations- und/oder Steuerdaten kann programmgesteuert erfolgen.

Weiterhin ist vorteilhaft, daß die Bitratenwandler von nur zwei Adressenzählern adressiert werden können, wodurch nur eine Schalteinrichtung zur Umschaltung zwischen diesen Adressenzählern benötigt wird, und sich der Schaltungsaufwand verringert.

Das Funkgerät weist weiter den Vorteil auf, daß auch in den Zeiten zwischen einem Auslese- oder Einschreibvorgang eines Sprachdatenwertes Daten in den oder aus dem Bitratenwandler gelesen werden können.

Das Funkgerät nach Patentanspruch 2 weist den Vorteil auf, daß durch eine entsprechende Adressierung der Bitratenwandler eine beliebige Reihenfolge für das Einschreiben und Auslesen der Daten möglich ist. Dadurch kann das Übertragungsprotokoll den jeweiligen Erfordernissen angepaßt werden.

Weiterhin weist das runkgerät nach Patentanspruch 2 den Vorteil auf, daß Daten mit unterschiedlichen Taktraten in den Speicher eingeschrieben und ausgelesen werden können.

Das Funkgerät nach Patentanspruch 3 weist den Vorteil auf, daß die Adressgeneratoren der Bitratenwandler durch einfache Zähler realisiert werden können oder beim Einschreiben und Auslesen von Steuerdaten ein Adressgenerator die Adressierung durchführt, der beliebige Adressen erzeugen kann.

Das Funkgerät nach Patentanspruch 4 weist den Vorteil auf, daß der Wechsel für die Bitratenwandler zwischen Datenquelle oder Datensenke gleichzeitig mit dem Wechsel der Adressgeneratoren erfolgt, so daß die Steuersignale für die Schalteinrichtungen im Datenpfad auch für die Schalteinrichtungen im Adresspfad verwendet werden können.

Die Erfindung wird im folgenden näher beschrieben und erläutert.

Es zeigen:
- Fig. 1: Eine Ausführungsform des erfindungsgemäßen Funkgerats;
- Fig. 2: Die zeitliche Abfolge der
a) Sende- und Empfangszeitschlitze,
b) Steuersignale der Schalteinrichtung SCH,
c) Steuersignale der Schalteinrichtungen S12 und S 12',
d) Steuersignale der Schalteinrichtungen S11 und S11',
e) Sprachdaten, wie sie vom Kodierer ausgegeben werden und darunter der Steuerdaten; die Reihenfolge, in der die Daten im Speicher der Bitratenwandler von Sender- und Empfängereinheit abgelegt sind und bitweise gesendet werden, sowie unten die zeitliche Reihenfolge, in der die Sprachdatenwerte aus dem Bitratenwandler in der Empfängereinheit ausgelesen werden.

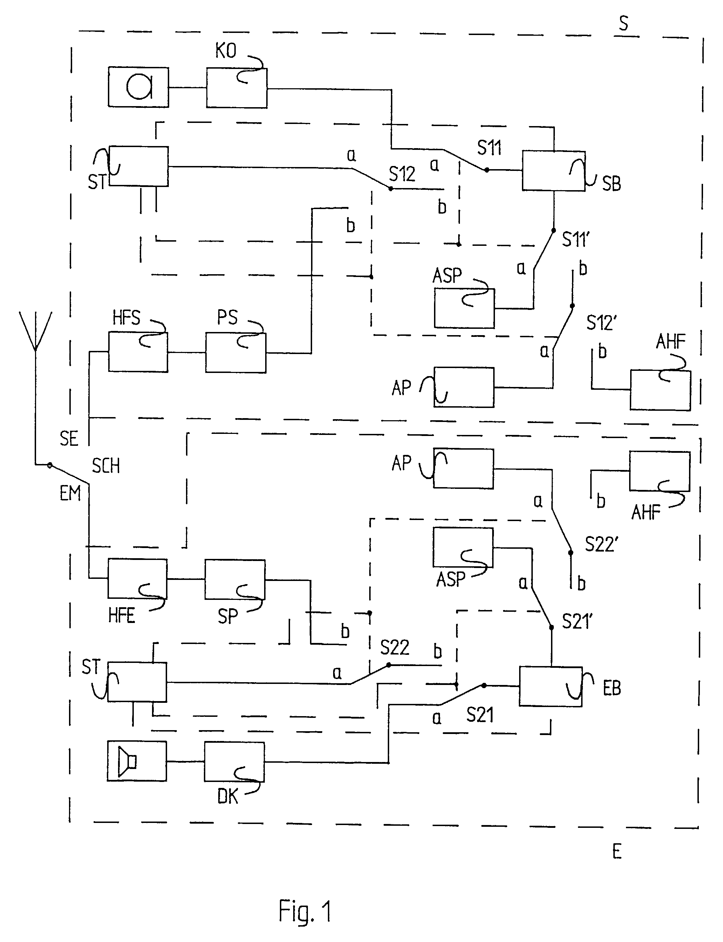

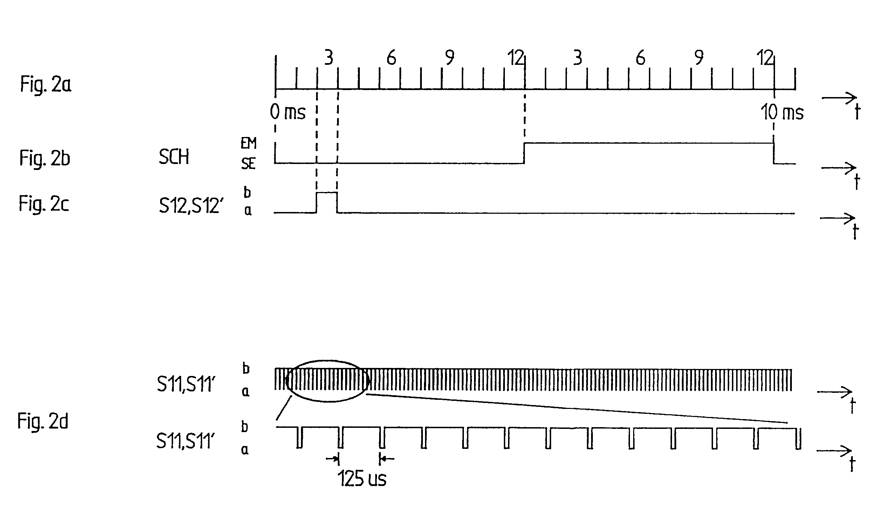

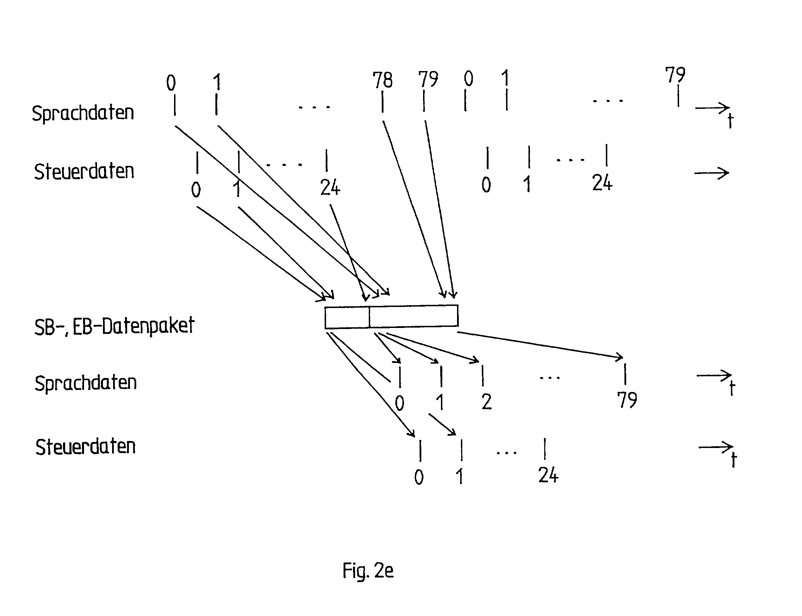

Eine Ausführungsform des erfindungsgemäßen Funkapparats ist in Fig. 1 dargestellt. Dabei wird von einem Funkapparat in Form eines digitalen schnurlosen Telefons ausgegangen. Der Einsatz des erfindungsgemäßen Funkapparats in beliebigen Geräten zur Informationsübertragung ist ebenfalls möglich. In Fig. 2 wird von einer Bitrate von 1152 kBit/s auf der Funkstrecke ausgegangen und einer Informationsbitrate von 32 kBit/s, wie sie bei Sprachübertragung mit ADPCM-Kodierung auftritt. Andere Bitraten sind aber ebenfalls realisierbar.

Im einzelnen zeigt Fig. 1 ein Funkgerät bestehend aus Sendeeinheit S und Empfangseinheit E mit Schalteinrichtung SCH und Antenne. Die Sendeeinheit S besteht aus dem Mikrofon, das das analoge Sprachsignal an den Analog-Digital-Wandler und ADPCM-Kodierer KO weiterleitet, der die Sprachdaten erzeugt. Diese werden über die Schalteinrichtung S11 in den Bitratenwandler SB eingegeben. Weiterhin setzt sich die Sendeeinheit S zusammen aus der Steuereinrichtung ST, die die Synchronisations- und/oder Steuerdaten erzeugt, welche über die Schalteinrichtungen S11 und S12 in den Bitratenwandler SB eingegeben werden, aus dem Parallel-Serienwandler PS und dem Sender HFS, der die bitratengewandelten Daten durch die Schalteinrichtung SCH an die Antenne weiterleitet und aussendet. Zur Adressierung des Speichers, der den Bitratenwandler SB realisiert, werden die drei Adressgeneratoren ASP, AP und AHF benötigt. Diese werden mittels der Schalteinrichtungen S11' und S 12' mit dem Bitratenwandler SB verbunden, um diesen zu adressieren. Die Adressgeneratoren ASP und AHF können durch einfache Zähler, AP kann durch die Steuereinrichtung ST realisiert werden.

Die Empfängereinheit E ist ähnlich aufgebaut. Sie besteht aus dem Empfänger HFE, der die empfangene Bitfolge an den Serien-Parallel-Wandler SP weiterleitet. Weiterhin aus der Steuereinheit ST und dem Dekodierer DK mit Digital-Analog-Wandler sowie einem Lautsprecher. Diese Funktionsblöcke werden durch die Schalteinrichtungen S21 und S22 mit dem Datenbus des Empfangsbitratenwandlers EB verbunden. Zur Adressierung des Empfangsbitratenwandlers EB dienen die drei Adressgeneratoren ASP, AP und AHF. Diese werden durch die Schalteinrichtungen S21' und S22' bedarfsgerecht mit dem Adressbus des Empfangsbitratenwandlers EB verbunden.

Im folgenden wird die Vorgehensweise in der Sendeeinheit S bei einer Sprachübertragung beschrieben. Zunächst wird das analoge Sprachsignal des Mikrofons mit einer Abtastrate von z.B. 8 kHz, die im allgemeinen zum Abtasten von Sprache beim Telefon verwendet wird, abgetastet. Danach erfolgt im ADPCM-Kodierer KO eine Kodierung in beispielsweise vier Bit breite Datenworte. Diese Sprachdaten werden anschließend im Bitratenwandler SB, der durch einen Speicher realisiert wird, mit der Abtastrate gespeichert. Hierfür ist der Speicher so organisiert, daß 4 Bit parallel eingeschrieben und adressiert werden können. Die Schalteinrichtungen S11 und S 11' befinden sich in Stellung a, so daß am 4 Bit breiten Datenbus des Speichers das 4 Bit breite Sprachdatenwort des Kodierers KO anliegt und der Adressbus mit dem Adressenzähler für Sprachdaten ASP verbunden ist.

Entsprechend dem Entwurf zum DECT-Standard (prETS 300175-2, 1991) sind bei Sprachübertragung den Sprachdaten zusätzlich Synchronisations- und Steuerdaten voranzustellen. Da die Daten in der Reihenfolge im Speicher abgelegt werden, in der sie gesendet werden, sind deshalb zuerst 25 Synchronisations- und Steuerdatenworte zu je 4 Bit abgespeichert, auf die 80 Sprachdatenworte innerhalb eines Datenpakets folgen. Um das erste Sprachdatenwort zu speichern, ist somit die 26te Speicherstelle zu adressieren. Deshalb startet der Adressenzähler für Sprachdaten ASP mit dem Wert 25 und erhöht für jedes Sprachdatenwort um eins. Ist somit das erste Wort der Sprachdaten abgespeichert, werden vor der Abspeicherung des nächsten Sprachdatenwortes die Schalteinrichtungen S11 und S11' betätigt. Durch S11 werden die vier Datenleitungen und durch S11' die sieben Adressleitungen in Stellung b umgeschaltet, so daß der Datenbus des Speichers mit der Steuereinrichtung ST verbunden ist und der Adressbus mit dem entsprechenden Adressgenerator AP. Der Adressgenerator AP adressiert jetzt die erste Speicherstelle, in die die ersten 4 Bit Steuerdaten abgespeichert werden. Danach schalten die Schalteinrichtungen S11 und S11' wieder um und es wird das nächste Sprachdatenwort im Bitratenwandler SB an der 27ten Speicherstelle abgespeichert. Anschließend folgen wieder 4 Bit Daten der Steuereinrichtung ST, die an der zweiten Speicherstelle abgespeichert werden. Hierzu schalten die Schalteinrichtungen S11 und S11' wieder in Schalterstellung b um. Durch diese Vorgehensweise werden bei 8 kHz Abtastfrequenz der Sprache alle 62,5 µs ein Sprach- oder Steuerdatenwort abgespeichert. Dieser Vorgang wiederholt sich, bis die Steuereinheit alle Daten an den Bitratenwandler SB ausgegeben hat und ggfs. noch Sprachdaten in den Bitratenwandler SB eingespeichert werden. Dann erfolgt alle 125 µs ein Abspeichervorgang. Es ist durch eine entsprechende Programmierung der Adressgeneratoren möglich, die Daten anders im Bitratenwandler anzuordnen und damit auch die Übertragungsreihenfolge zu ändern, ohne die Schaltung selbst zu ändern.

Die im Bitratenwandler SB zwischengespeicherten Daten werden im Übertragungszeitschlitz gesendet. Hierfür schalten die Schalteinrichtungen S11, S11' , S12 und S12' in die Schalterstellung b, in der der Datenbus des Bitratenwandlers SB über einen Parallel-Serien-Wandler PS mit dem Sender HFS verbunden ist und der Adressbus des Bitratenwandlers SB mit dem Adressgenerator für den Sender AHF. Der Speicher des Bitratenwandlers SB erhält den Befehl zum Auslesen der enthaltenen Daten. Der Adressgenerator AHF zählt mit einer Taktrate von 288 kHz hoch und adressiert dadurch den Speicher (Bitratenwandler SB), der die Daten als 4 Bit breite Datenworte ausgibt. Diese werden im Parallel-Serien-Wandler PS in eine Bitfolge umgewandelt und vom Sender HFS mit 1152 kBit/s gesendet.

Da auch während des Sendevorgangs Sprachdaten vom Kodierer KO ausgegeben werden, ist es erforderlich, daß die Schalteinrichtungen S11 und S11' weiterhin mit der Abtastfrequenz in die Schalterstellung a wechseln, in der ein Sprachdatenwort in den Bitratenwandler SB eingeschrieben wird. Gleichzeitig mit dem Umschalten der Schalteinrichtungen S11 und S11' in Schalterstellung a muß der Bitratenwandler SB durch einen Steuerbefehl von Auslesen auf Einschreiben umgestellt werden. Ist das Sprachdatenwort in den Bitratenwandler SB eingeschrieben, wechseln die Schalteinrichtungen S11 und S11' wieder in Stellung b und der Steuerbefehl von Einschreiben auf Auslesen. Durch die Übernahme des Sprachdatenwortes in den Bitratenwandler SB kommt es zu keiner Verzögerung bei der stattfindenden Übertragung, und auch der Adressgenerator für den Sender AHF muß nicht angehalten werden, da das Einscheiben eines Sprachdatenwortes innerhalb einer halben Zählperiode des Adressgenerators für den Sender AHF erfolgt. Ist der Sendevorgang durchgeführt, werden wieder Sprach- und Steuerdaten in den Bitratenwandler SB eingeschrieben, bis im folgenden Sendezeitschlitz deren Übertragung erfolgt.

Wird hingegen ein Sprachsignal empfangen, sind die Schalteinrichtungen S22', S21', S22 und S 21 der Empfängereinrichtung E in Stellung b und die Schalteinrichtung SCH in Stellung EM. Im Empfänger HFE wird die zur Synchronisation übertragene Bitfolge auf ansich bekannte Art und Weise ausgewertet. Die Steuer- und Sprachdaten werden ins Basisband übertragen und im Serien-Parallel-Wandler SP in Datenworte von 4 Bit Breite gewandelt. Diese Datenworte werden in den Bitratenwandler EB eingeschrieben. Hierfür legt der Adressgenerator für den Empfänger AHF die benötigten Adressen an den Adressbus des Speichers, der als Bitratenwandler EB dient. Dabei wird der Adressengenerator für den Empfänger AHF mit ca. einem Viertel der Übertragungsbitrate bei dem Wert Null beginnend hochgezählt, so daß die Datenworte in der Reihenfolge der Übertragung abgespeichert werden. Um, wie erforderlich, mit der Abtastfrequenz der Sprache Sprachdaten auszugeben, werden während des Einschreibens der Übertragungsdaten auch Sprachdatenworte ausgegeben. Dieser Vorgang erfolgt in Analogie zum Einschreiben vom Sprachdaten bei einem Übertragungsvorgang in der Sendeeinrichtung S. In der Empfangseinrichtung E werden die Schalteinrichtungen S21 und S21' in die Stellung a und der Bitratenwandler EB von Einschreiben auf Auslesen umgeschaltet. Durch den Adressgenerator für Sprachdaten ASP wird das benötigte Sprachdatenwort adressiert und vom Bitratenwandler EB an den Dekoder und Digital-Analog-Wandler DK weitergegeben, der das analoge Sprachsignal erzeugt, das ausgegeben wird. Danach schalten S21 und S21' wieder in Stellung b um, und der Bitratenwandler EB erhält den Befehl, Daten einzuschreiben, um den Empfangsvorgang fortzusetzen.

Hierbei ist von Bedeutung, daß weder der Adressgenerator für Sprachdaten ASP noch der Adressgenerator für den Empfänger AHF angehalten werden müssen und daß diese Adressgeneratoren mit verschiedenen Taktraten betrieben werden.

In Fig. 2 a-e ist die genaue zeitliche Abfolge der einzelnen Vorgänge dargestellt. Fig. 2a zeigt die Einteilung der Rahmendauer von 10 ms in verschiedene Zeitschlitze, die die Übertragungskanäle bilden. Die ersten 12 Zeitschlitze bzw. Übertragungskanäle seien z.B. für die Übertragung von den Mobilteilen zum Basisteil vorgesehen; dann dienen die folgenden 12 Zeitschlitze der Übertragung vom Basisteil zu den Mobilteilen. Die Schalteinrichtung SCH schaltet dementsprechend, wie in Fig. 2b dargestellt, entweder die Sendeeinrichtung, in Stellung SE, oder die Empfangseinrichtung, in Stellung EM, zur Antenne durch.

Wurde von Basis- und Mobilteil der dritte Zeitschlitz für die Übertragung ausgewählt, wechseln die Schalteinrichtungen S12 und S12' für die Dauer des dritten Zeitschlitzes von Stellung a in Stellung b, wie es Fig. 2c zeigt. Die Schalteinrichtungen S11 und S11' schalten permanent mit der Abtastfrequenz um, was in Fig. 2d in einem ungefähren zeitlichen Zusammenhang zu Fig. 2c dargestellt ist.

Wegen der sehr viel größeren Datenrate bei einem Sende- oder Empfangsvorgang von 1,152 MBit/s, verglichen mit der Abtastfrequenz der Sprache von 8 kHz, gibt es zwei Möglichkeiten, die Schalteinrichtungen S11 und S11' zu steuern. Entweder schaltet man mit der Sendebitrate dividiert durch die Datenbusbreite um (hier: 1,152 MBit/s : 4 Bit = 288 kHz), oder, wovon in der weiteren Beschreibung ausgegangen wird, man unterdrückt unnötige Schaltvorgänge und erhält für das Steuersignal der Schalteinrichtungen S11 und S11' ein Tastverhältnis, das sich aus dem Quotienten von Sendedatenrate und Sprachdatenrate errechnet (hier: 288 kHz : 8 kHz = 36:1), bei einer Periodendauer von 125 µs.

Bei einer Abtastfrequenz der Sprache von 8 kHz und einer Rahmendauer von 10 ms, ergeben sich, wie in Fig. 2e dargestellt, für jeden Sendezeitschlitz 80 Sprachdatenworte, die mit der Abtastfrequenz vom ADPCM-Kodierer KO an den Bitratenwandler SB weitergeleitet werden. Hinzu kommen Steuerdatenworte, die ebenfalls im Bitratenwandler SB abgespeichert werden. Hierbei wird, sobald die Schalteinrichtungen S11 und S11' die Stellung a einnehmen, ein Sprachdatenwort vom Kodierer KO an den Datenbus des Bitratenwandlers SB angelegt. Die Adresse dieses Sprachdatenwortes wird vom Adressenzähler für Sprachdaten ASP an den Adressbus des Bitratenwandlers SB angelegt. Schalten die Schalteinrichtungen S11 und S11' in Stellung b um, so wird die Steuereinheit ST mit dem Datenbus und der Adressgenerator für die Steuerdaten AP mit dem Adressbus verbunden, so daß ein Synchronisations- oder Steuerdatenwort in den Bitratenwandler SB übernommen wird. Dieses abwechselnde Einschreiben von Daten in den Bitratenwandler SB mit der doppelten Abtastfrequenz setzt sich fort, bis die Steuereinheit ST keine Steuerdaten mehr zur Verfügung stellt. Ab diesem Zeitpunkt werden noch Sprachdaten in den Bitratenwandler SB eingeschrieben, bis der Sendezeitschlitz beginnt.

Im Sendezeitschlitz schalten die Schalteinrichtungen S12 und S12' um in Stellung b. Dadurch wird mittels der Schaltereinrichtung S11 jetzt zwischen dem Kodierer KO und dem Sender HFS umgeschaltet, mittels der Schaltereinrichtung S11' zwischen dem Adressenzähler für Sprachdaten ASP und dem Adressgenerator für den Sender AHF. Im Sendezeitschlitz werden sowohl Sprachdatenworte mit der Abtastfrequenz in den Bitratenwandler SB eingeschrieben, als auch der Inhalt des Bitratenwandlers SB ausgelesen. Um die im Bitratenwandler SB gespeicherten Daten zu senden, wird der Adressenzähler für den Sender AHF mit einem Viertel der Sendebitrate hochgezählt und der Steuerbefehl für den Bitratenwandler SB von Einschreiben auf Auslesen geändert. Dadurch werden die gespeicherten Datenwörter der Reihe nach an den Parallel-Serien-Wandler PS ausgegeben, der diese in eine Bitfolge umwandelt, die der Sender HFS über die Antenne ausgibt. Liegt während des Sendevorgangs ein Sprachdatenwort am Kodierer KO vor, wird dieses Datenwort im Bitratenwandler SB abgespeichert, indem die Schalteinrichtungen S11 und S11' kurzzeitig in Stellung a wechseln, ohne daß es beim Senden zu einer Verzögerung kommt. Die Übertragungsreihenfolge entspricht der Reihenfolge, in der die Daten im Bitratenwandler des Senders SB abgespeichert wurden. In dieser Reihenfolge sind die Daten auch im Bitratenwandler des Empfängers EB abgespeichert.

Bei einem Empfangsvorgang werden die vom Sender HFS gesendeten Daten der Teilnehmereinrichtung, mit der die Funkübertragung stattfindet, über die Antenne an den Empfänger HFE weitergeleitet. Nachdem der Empfänger HFE die Steuer- und Sprachdaten ins Basisband übertragen hat, synchronisiert er sich mit Hilfe der übertragenen Synchronisationsbits auf den Sender HFS der sendenden Teilnehmereinrichtung. Der Serien-Parallel-Wandler SP faßt je 4 Bit zu einem Datenwort zusammen. Das Datenwort wird aufgrund der Breite von 4 Bit mit einem Viertel der Übertragungsbitrate in den Bitratenwandler EB eingeschrieben. Hierfür befindet sich die Schalteinrichtung SCH in Stellung EM und die Schalteinrichtungen S21, S22, S21' und S22' in Stellung b. Der Steuerbefehl für den Bitratenwandler EB lautet auf Einschreiben. Der Bitratenwandler EB wird durch den Adressenzähler für den Empfänger AHF adressiert, der mit dem Wert Null beginnend hochzählt, und schreibt die Daten, wie sie vom Serien-Parallel-Wandler SP ausgegeben werden, ein. Da die Sprachdaten, die im Bitratenwandler EB gespeichert sind, mit der Abtastfrequenz an den Dekodierer DK weitergegeben werden müssen, schalten die Schalteinrichtungen S21 und S21' mit der Abtastfrequenz in Stellung a um. Das Steuersignal für die Schalteinrichtungen S21 und S 21' entspricht dem für die Schalteinrichtungen S11 und S11' im Sender. Gleichzeitig wird der Bitratenwandler EB durch den Adressgenerator für Sprachdaten ASP adressiert und durch die Steuereinheit ST von Einschreiben auf Auslesen umgeschaltet. Daraufhin wird vom Bitratenwandler EB ein Sprachdatenwort an den Dekodierer DK ausgegeben. Weil die Daten im Bitratenwandler EB der Empfangseinheit in der gleichen Reihenfolge abgelegt sind, wie die Daten im Bitratenwandler SB der Sendeeinheit, ist das erste Sprachdatenwort auf dem 26ten Speicherplatz abgelegt. Danach wird wieder der Empfangsvorgang fortgesetzt. Diese Vorgehensweise wiederholt sich, bis der Empfangszeitschlitz beendet ist und alle gesendeten Daten empfangen wurden.

Danach schalten die Schalteinrichtungen S22 und S22' in Stellung a um, so daß die Steuereinheit ST die übertragenen Steuerdaten aus dem Bitratenwandler EB auslesen kann. Der Steuerbefehl für den Bitratenwandler EB wird dafür auf Auslesen geändert und der Adressgenerator für Steuerdaten AP zählt vom Wert Null bis 24 hoch. Weiterhin schaltet S21 und S21' mit der Abtastfrequenz zwischen Stellung a und b hin und her, damit der Bitratenwandler EB vom Adressgenerator für Sprachdaten ASP so adressiert wird, daß der Dekoder DK aus den dann ausgegebenen Sprachdaten ein analoges Sprachsignal formen kann. Dies geschieht dadurch, daß der Adressenzähler für Sprachdaten ASP ausgehend vom Wert 25 hochzählt bis zum Wert 104.

Somit wird abwechselnd ein Sprachdatenwort und ein Steuerdatenwort aus dem Empfangsbitratenwandler EB ausgelesen. Die Sprachdatenworte werden über den Dekoder und Digital-Analog-Wandler DK an den Lautsprecher ausgegeben. Die Steuerdatenworte werden an die Steuereinheit ST weitergeleitet und von ihr ausgewertet. Da die Steuerdaten keine für die Sprachausgabe benötigten Informationen enthalten, besteht kein zeitlicher Zusammenhang zwischen der Sprachausgabe und der Auswertung von Steuerinformationen. Selbstverständlich besteht auch die Möglichkeit, zwischen der Ausgabe von zwei Sprachdatenworten mehrere Steuerdatenworte von der Steuereinheit ST aus dem Empfangsbitratenwandler EB auslesen zu lassen. Hierfür ist dann der Adressgenerator für Steuerdaten AP mit einer entsprechend höheren Taktrate zu versorgen.

Alternativ zur beschriebenen Ausführungsform besteht die Möglichkeit, den jeweiligen Adressgenerator für Steuerdaten AP mit dem jeweiligen Adressgenerator für Sender bzw. Empfänger AHF zusammenzufassen, da ein zeitgleiches Einschreiben und Auslesen von Steuer- und Sende- bzw. Empfangsdaten ausgeschlossen ist. Dadurch können die Schalteinrichtungen S12' und S22' sowie in Sende- und Empfangseinrichtung je ein Adressgenerator eingespart werden. Der Adressgenerator, der jetzt die Adressierung des Bitratenwandlers beim Einschreiben oder Auslesen der Steuerdaten und beim Sende- oder Empfangsvorgang durchführt, muß jedoch mit zwei verschiedenen Taktraten arbeiten, so daß sowohl die Adressierung beim Einschreiben der Steuerdaten mit der Abtastfrequenz als auch die Adressierung zum Auslesen beim Sendevorgang mit einem Viertel der Sendebitrate möglich ist. Weiterhin muß der Start- und Endwert dieses Adressgenerators veränderbar sein, da die Datenworte an verschiedenen Speicherstellen abzuspeichern sind.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

Insbesondere sei auf die Anwendung in einem drahtgebunenen Zeitmultiplex-Übertragungssystem hingewiesen.

## Patentansprüche

1. Funkgerät (S. E) für ein digitales Funkübertragungssystem mit einer Sendeeinrichtung (S) mit einem Kodierer (KO), der mit einem ersten Bitratenwandler (SB) zur Bitratenerhöhung verbunden ist. mit einer Empfangseinrichtung (E) mit einem zweiten Bitratenwandler (EB) zur Bitratenverringerung einer empfangenen Bitfolge, die einem Dekoder (DK) zugeleitet werden, sowie mit einer Schalteinrichtung (SCH) zur Umschaltung eines Hochfrequenzsendeteils (HFS) und eines Hochfrequenzempfangsteils (HFE),
dadurch gekennzeichnet.
daß die Sendeeinrichtung (S) mindestens eine Zeitmultiplexschalteinrichtung (S11, S12) aufweist, die zur Verbindung des ersten Bitratenwandlers (SB) in äquidistanten Zeitabständen mit dem Kodierer (KO), in den dazwischenliegenden Zeiträumen, die im Sendezeitschlitz liegen, mit dem Hochfrequenz-Sendeteil (HFS) und in den übrigen Zeiträumen mit einer Steuereinrichtung (ST) der Sendeeinrichtung(s) vorgesehen ist und/oder
daß die Empfangseinrichtung (E) mindestens eine Zeitmultiplexschalteinrichtung (S21, S22) aufweist. die zur Verbindung des zweiten Bitratenwandlers (EB) in äquidistanten Zeitabständen mit dem Dekodierer (DK), in den dazwischenliegenden Zeiträumen, die im Empfangszeitschlitz liegen, mit dem Hochfrequenz-Empfangsteil (HFE) und in den übrigen Zeiträumen mit einer Steuereinrichtung (ST) der Empfangseinrichtung (E) vorgesehen ist.

2. Funkgerät nach Anspruch 1.
dadurch gekennzeichnet,
daß der erste und der zweite Bitratenwandler (SB, EB) adressierbare Speicher sind.

3. Funkgerät nach einem der Ansprüche 1 oder 2.
dadurch gekennzeichnet,
daß der erste und der zweite Bitratenwandler (SB. EB) einen Adressbus aufweisen, der über weitere Schalteinrichtungen (S11', S12'. S21'. S22') mit unterschiedlichen Adressgeneratoren (ASP, AP, AHF) verbindbar ist.

4. Funkgerät nach einem der Ansprüche 1 bis 3.
dadurch gekennzeichnet,
daß die Schalteinrichtungen (S11', S12', S21', S22') zur Durchschaltung eines Datenpfades (S11, S12, S21, S22) synchron zu den Schalteinrichtungen zur Durchschaltung eines Adresspfades (S11'. S12'. S21', S22') gesteuert werden.

5. Funkgerät nach einem der Ansprüche 1 bis 4.
dadurch gekennzeichnet,
daß das Funkgerät (S, E) für ein TDM-FDM-Funkübertragungssystem, insbesondere für ein DECT-Übertragungssystem vorgesehen ist.

6. Funkgerät nach einem der Ansprüche 1 bis 5,
dadurch gekennzeichnet,
daß das Funkgerät (S, E) die Basisstation und/oder die Mobilstation eines schnurlosen Telefonapparats ist.

7. Digitales Funkübertragungssystem mit einem Funkgerät (S, E) nach einem der Ansprüche 1 bis 5.

## Claims

1. Radio transceiver (S, E) for a digital radio transmission system, having a transmitting device (S) with a coder (KO) that is connected to a first bit rate converter (SB) for increasing the bit rate, having a receiving device (E) with a second bit rate converter (EB) for reducing the bit rate of a received bit string that is fed to a decoder (DK), as well as a switching device (SCH) for switching between a high-frequency transmitting section (HFS) and a high-frequency receiving section (HFE),
characterised in that
the transmitting device (S) has at least one time-division multiplex device (S11, S12) that is provided for connecting the first bit rate converter (SB) to the coder (KO) in equidistant time intervals, to the high-frequency transmitting section (HFS) in the intermediate time spaces which lie in the transmit time slot, and to a control device (ST) of the transmitting device (S) in the remaining time spaces, and/or
that the receiving device (E) has at least one time-division multiplex device (S21, S22) that is provided for connecting the second bit rate converter (EB) to the decoder (DK) in equidistant time intervals, to the high-frequency receiving section (HFE) in the intermediate time spaces which lie in the receive time slot, and to a control device (ST) of the receiving device (E) in the remaining time spaces.

2. Radio transceiver according to Claim 1,
characterised in that
the first and second bit rate converters (SB, EB) are addressable memories.

3. Radio transceiver according to one of Claims 1 or 2,
characterised in that
the first and second bit rate converters (SB, EB) have an address bus that can be connected via further switching devices (S11', S12', S21', S22') to different address generators (ASP, AP, AHF).

4. Radio transceiver according to one of Claims 1 to 3,
characterised in that
the switching devices (S11', S12', S21', S22') for connecting a data bus (S11, S12, S21, S22) are controlled in synchronism with the switching devices for connecting an address bus (S11', S12', S21', S22').

5. Radio transceiver according to one of Claims 1 to 4,
characterised in that
the radio transceiver (S, E) is intended for a TDM-FDM radio transmission system, in particular for a DECT transmission system.

6. Radio transceiver according to one of Claims 1 to 5,
characterised in that
the radio transceiver (S, E) is the base station and/or the mobile station of a cordless telephone.

7. Digital radio transmission having a radio transceiver (S, E) according to one of Claims 1 to 5.

## Revendications

1. Appareil radio (S,E) pour un système de transmission radio numérique comportant un dispositif d'émission (S) pourvu d'un codeur (KO) qui est relié à un premier convertisseur de cadence binaire (SB) pour accroître la cadence binaire, un dispositif de réception (E) comportant un second convertisseur de cadence binaire (EB) pour réduire la cadence binaire d'une suite binaire reçue qui est envoyée à un décodeur (DK), ainsi qu'un dispositif de commutation (SCH) pour la commutation d'une partie d'émission à haute fréquence (HFS) et d'une partie de réception à haute fréquence (HFE),
caractérisé en ce
que le dispositif d'émission (S) comporte au moins un dispositif de commutation à multiplexage temporel (S11, S12), qui est prévu pour relier le premier convertisseur de cadence binaire (SB), à des instants équidistants, au codeur (KO) et pendant les intervalles de temps intercalaires situés dans le créneau temporel d'émission, à la partie d'émission à haute fréquence (HFS) et, pendant les autres intervalles de temps, à un dispositif de commande (ST) du dispositif de réception d'émission, et/ou
que le dispositif de réception (E) comporte au moins un dispositif de commutation temporelle (S21, S22), qui est prévu pour relier le second convertisseur de cadence binaire (EB), pendant des intervalles de temps équidistants, au décodeur (DK), et pendant des intervalles de temps intercalaires, qui sont situés dans le créneau temporel de réception, à la partie de réception à haute fréquence (HFE) et, pendant les autres intervalles de temps, à un dispositif de commande (ST) du dispositif de réception (E).

2. Appareil radio selon la revendication 1,
caractérisé en ce
que les premier et second convertisseurs de cadence binaire (SB, EB) sont des mémoires adressables.

3. Appareil radio selon l'une des revendications 1 ou 2,
caractérisé en ce
que les premier et second convertisseurs de cadence binaire (SB, EB) comportent un bus de transmission d'adresses, qui peut être relié au moyen d'autres dispositifs de commutation (S11', S12', S21', S22') à des générateurs d'adresses différents (ASP, AP, AHF).

4. Appareil radio selon l'une des revendications 1 à 3,
caractérisé en ce
que les dispositifs de commutation (S11', S12', S21', S22') pour l'interconnexion d'une voie de transmission de données (Sll, S12, S21, S22) sont commandés en synchronisme avec les dispositifs de commutation pour l'interconnexion d'une voie de tension d'adresse (S11', S12', S21', S22').

5. Appareil radio selon l'une des revendications 1 à 4,
caractérisé en ce
que l'appareil radio (S, E) est prévu pour un système de transmission radio TDM-FDM, notamment pour un système de transmission DECT.

6. Appareil radio selon l'une des revendications 1 à 5,
caractérisé en ce
que l'appareil radio (S, E) est le poste de base et/ou le poste mobile d'un appareil téléphonique sans fil.

7. Système numérique de transmission radio comportant un appareil radio (S, E) selon l'une des revendications 1 à 5.
